Europäisches Patentamt

European Patent Office

Office européen des brevets

(11) Publication number: **0 306 558 B1**

# EUROPEAN PATENT SPECIFICATION

(45) Date of publication of patent specification: **12.06.91**

(51) Int. Cl.⁵: **F16H 61/04**

(21) Application number: **87117607.9**

(22) Date of filing: **17.08.83**

(60) Publication number of the earlier application in accordance with Art.76 EPC: **0 103 751**

(54) **Automatic transmission.**

(30) Priority: **20.08.82 JP 143288/82**

(43) Date of publication of application:
**15.03.89 Bulletin 89/11**

(45) Publication of the grant of the patent:
**12.06.91 Bulletin 91/24**

(84) Designated Contracting States:
**DE FR GB**

(56) References cited:
**FR-A- 2 046 430**
**US-A- 3 656 373**
**US-A- 3 685 372**

(73) Proprietor: **NISSAN MOTOR CO., LTD.**
**No.2, Takara-cho, Kanagawa-ku**
**Yokohama City(JP)**

(72) Inventor: **Sugano, Kazuhiko**
**No. 3-4688-1 Sobudai Zama**
**City(JP)**

(74) Representative: **Patentanwälte Grünecker,**
**Kinkeldey, Stockmair & Partner**
**Maximilianstrasse 58**
**W-8000 München 22(DE)**

## Description

The present invention relates to an automatic transmission according to the preamble part of Claim 1. Such a conventional automatic transmission is known e.g. from US-A-3 656 373 and has a hydraulic control system having a first chamber, a second chamber, a servo release chamber, a 2-3 shift valve and a 3-4 shift valve. The 2-3 shift valve provides actuating fluid pressure in an upshift position providing fluid through two conduits to apply a clutch. When the 3-4 shift valve is in the downshift position, further conduits are connected and a third conduit is charged with pressure via an additional valve. When the 3-4 shift valve moves to an upshift position, a connection to drain conduits is established.

US-A 3 685 372 discloses a three speed automatic transmission control apparatus, wherein the servo-release chamber is discharged through a 2-3 timing valve which is piloted by a governer pressure acting to drain or feed through an orifice and the throttle pressure is acting to by-pass said orifice.

A further transmission control system is known from FR-A 2 064 430, wherein an exhaust orifice can be by-passed upon the pressurization of a clutch.

It is an object of the present invention to provide an automatic transmission according to the preamble part of the main Claim which is able to avoid an additional shift valve and which is capable of avoiding the draw back that the shift valves, including the additional shift valve, must shift their states simultaneously.

The solution of this object is achieved by the features of the single main Claim.

## BRIEF DESCRIPTION OF THE DRAWINGS

Fig. 1 is a schematic view of a power transmission mechanism of a four speed automatic transmission as illustrated in connection with an engine which has a throttle mounted in an intake passage and an accelerator pedal; and

Figs 2(a), 2(b), 2(c) and 3, when combined, illustrate a circuit diagram of a preferred embodiment of a hydraulic control system for the automatic transmission according to the present invention.

## DETAILED DESCRIPTION OF THE INVENTION

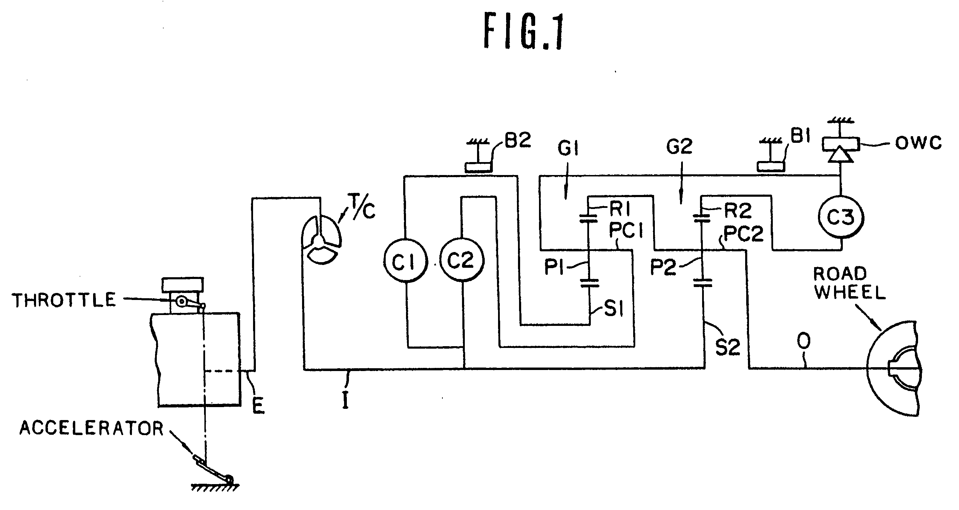

Referring to Fig. 1, there is illustrated a power transmission mechanism of a four forward speed and one reverse speed automatic transmission having an overdrive. This power transmission mechanism comprises an input shaft I operatively connected via a torque converter T/C to an engine output shaft E of an engine which has a throttle which opens in degrees, an output shaft O operatively connected to road wheels, only one being shown, via a final drive, not shown. A first planetary gear set G1 and a second planetary gear set G2 are connected between the input and output shafts I and O. A plurality of fluid operated friction units are provided which are made operative and inoperative for producing a plurality of speed ratios between the input shaft I and output shaft O. The fluid operated frictional units include a first clutch C1, a second clutch C2, a third clutch C3, a first brake B1, a second brake B2, and a one-way clutch OWC. The first planetary gear set G1 comprises a sun gear S1, an internal gear R1, a carrier PC1 carrying pinion gears P1 meshing simultaneously both the gears S1 and R1. The planetary gear set G2 comprises a sun gear S2, an internal gear R2 and a carrier PC2 carrying pinion gears P2 meshing simultaneouly both gears S2 and R2. The carrier PC1 is connectable via the clutch C1 with the input shaft I, and the sun gear S1 is connectable via the clutch C2 with the input shaft I. The carrier PC1 is connectable via the clutch C3 with the internal gear R2. The sun gear S2 is constantly connected with the input shaft I. The internal gear R1 and carrier PC2 are constantly connected with the output shaft O. The brake B1 is arranged to anchor the carrier PC1. The brake B2 is arranged to anchor the sun gear S1. The one-way clutch OWC is so constructed that it allows forward rotation (i.e., the same rotation as that of the engine output shaft E), but prevents reverse rotation (i.e., the rotation opposite to the forward rotation). Thus, it acts as a brake only during reverse rotation.

In the above mentioned power transmission mechanism, the rotational state of each of the rotary elements (S1, S2, R1, R2, PC1, and PC2) of the planetary gear sets G1 and G2 can be varied by actuating selected one or combination of the cluthes C1, C2 and C3 brake B1, (one-way clutch OWC) and brake B2, thus varying the revolution speed of the output shaft O relative to that of the input shaft I. The four forward speed ratios and one reverse speed ratio are produced if the clutches C1, C2 and C3 and brakes B1 and B2 are engaged in the manner as shown in the following Table.

## Table

| | C1 | C2 | C3 | B1 (DWC) | B2 | Gear Ratio | $\alpha 1 = 0.45$ $\alpha 2 = 0.45$ |
|---|---|---|---|---|---|---|---|
| 1st speed | | | | o | o | | $\dfrac{1 + \alpha 2}{\alpha 2}$ | 3.22 |
| 2nd speed | | | o | | | o | $\dfrac{\alpha 1 + \alpha 2}{\alpha 2(1 + \alpha 1)}$ | 1.38 |
| 3rd speed | | o | o | | | | 1 | 1 |
| 4th speed | | o | | | | o | $\dfrac{1}{1 + \alpha 1}$ | 0.69 |
| Reverse | o | | | o | | | $-\dfrac{1}{\alpha 1}$ | -2.22 |

In the above Table, a sign "o" denotes actuation state of the clutch or brake, $\alpha 1$ and $\alpha 2$ respectively denote ratios of number of teeth of the internal gears R1 and R2 to number of teeth of the corresponding sun gears S1 and S2. A gear ratio is a ratio of the revolution number of the input shaft I to that of the output shaft O. What is denoted by the label (OWC) below the brake B1 means that the first speed ratio is produced owing to the action of the one-way clutch OWC even if the brake B1 is not applied. However, in this first speed ratio, it is not possible for the output shaft O to drive the engine (that is, no engine braking is effected).

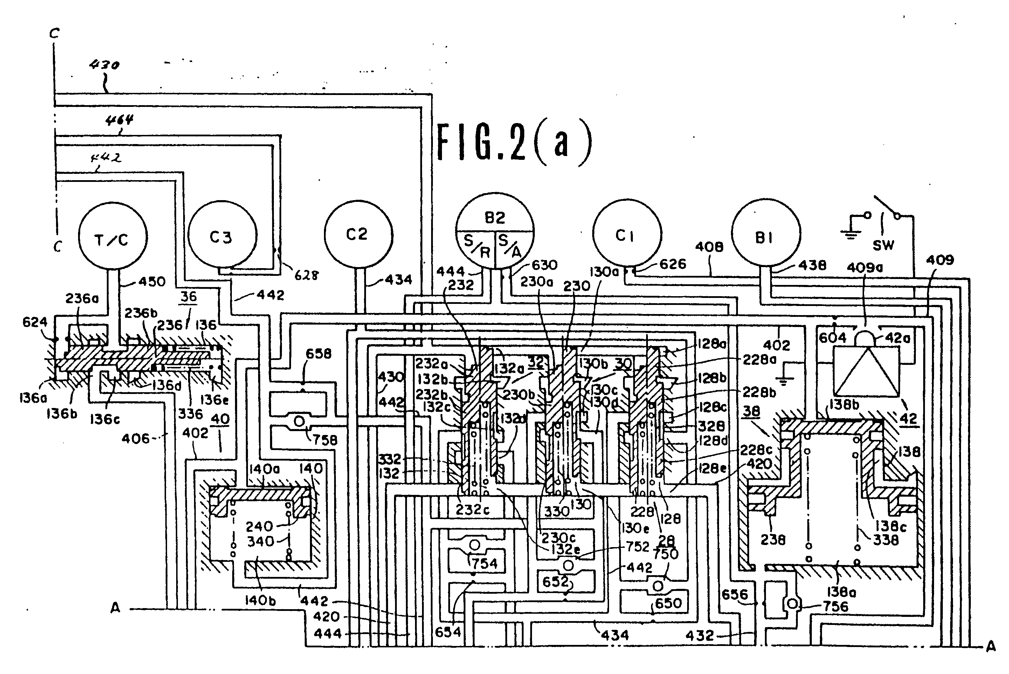

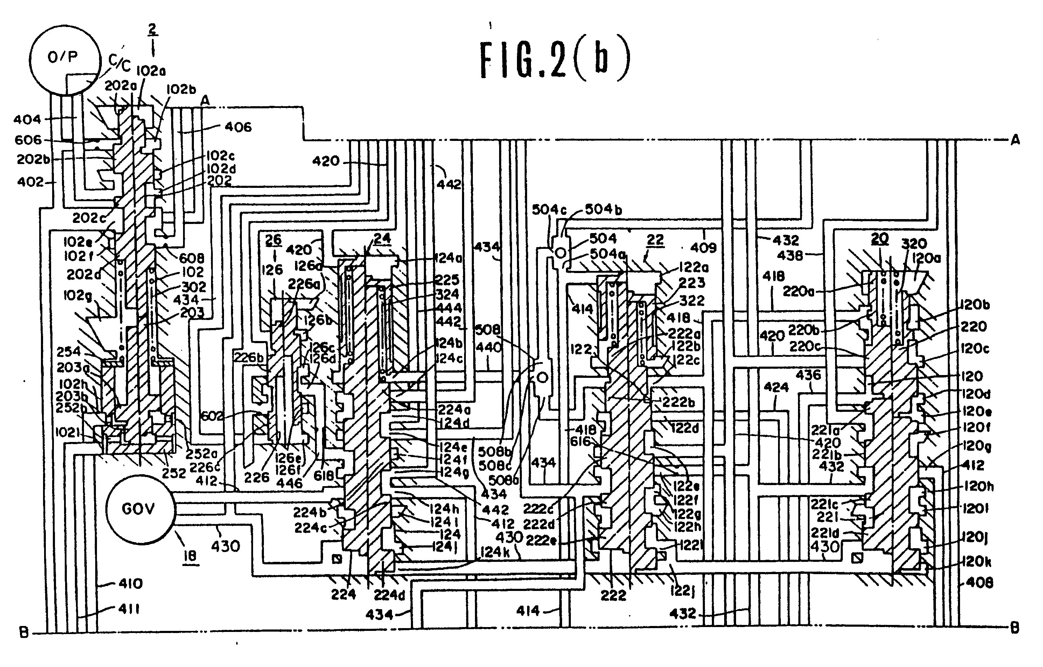

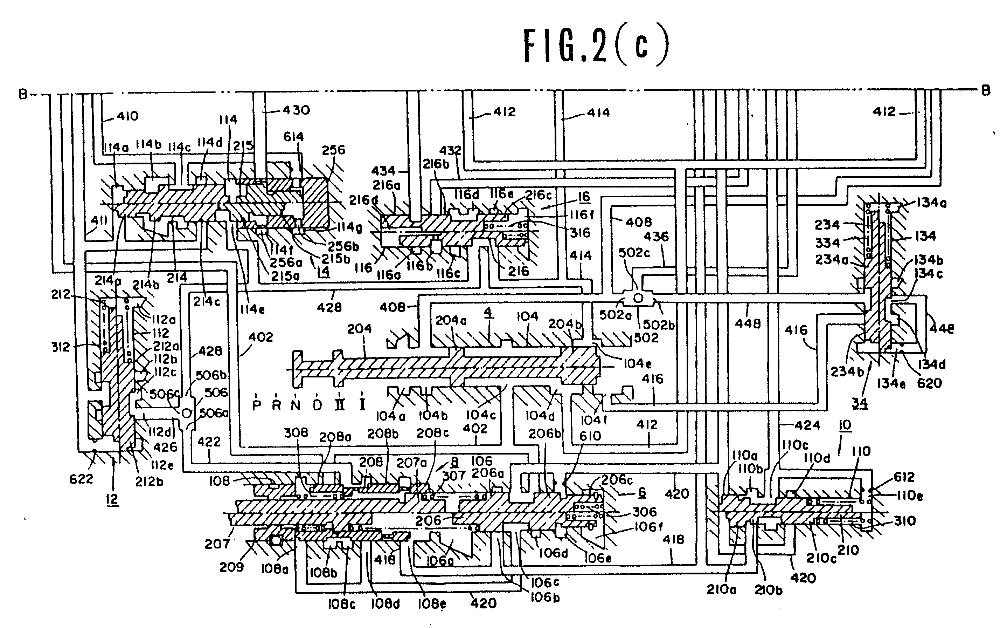

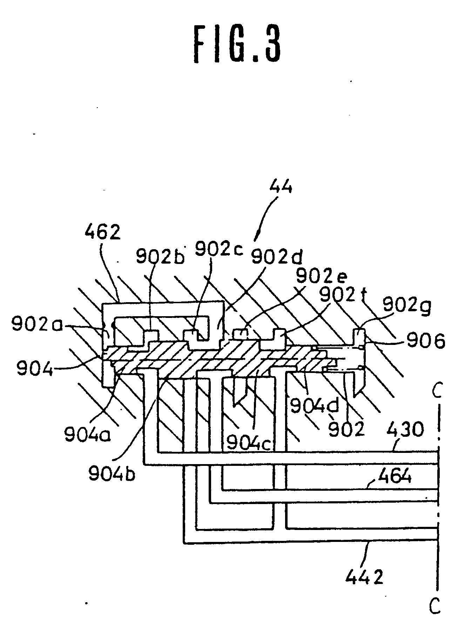

Referring to Figs. 2(a), 2(b), 2(c), and 3, a hydraulic control system for the above power transmission mechanism is described.

This hydraulic control system comprises a regulator valve 2, a manual valve 4, a throttle valve 6, a throttle fail safe valve 8, a throttle modulator valve 10, a pressure modifier valve 12, a cut back valve 14, a 1-2 shift valve 20, a 2-3 shift valve 22, a 3-4 shift valve 24, a 2-4 timing valve 26, a 2-3 timing valve 28, a 3-4 timing valve 30, a 3-2 timing valve 32, a first manual range pressure reducing valve 34, a torque converter pressure reducing valve 36, a 1-2 accumulator 38, a 4-3 accumulator 40, an overdrive inhibitor solenoid 42, and a centrifugal force offset valve 44 (see Fig. 3). These valves are interconnected as shown in Figs. 2(a), 2(b), 2(c), and 3, and connected with an oil pump O/P, the torque converter T/C, clutches C1, C2 and brakes B1 and B2 as shown. The brake B2 has a servo apply chamber S/A, i.e., a fluid pressure chamber designed to apply the brake when pressurized, and a servo release chamber S/R, i.e., a fluid pressure chamber designed to release the brake when pressurized. Since the servo release chamber S/R has a larger pressure acting area than a pressure acting area of the servo apply chamber S/A, the brake B2 is released when the pressure is supplied to the servo release chamber S/R irrespective of the supply of fluid pressure to the servo apply chamber S/A. The overdrive inhibitor solenoid 42 is electrically connected with an overdrive inhibitor switch SW.

The names of parts denoted by the reference numerals in Figs. 2(a), 2(b) and 2(c) are hereinafter listed. The reference numerals 102, 104, 106, 108, 110, 112, 114, 116, 120, 122, 124, 126, 128, 130, 132, 1334 and 136 denote valve bores, the reference numerals 102a~j, 104a~f, 106a~f, 108a~e, 110a~e, 112a~e, 114a~g, 116a~f, 120a~k, 122a~j, 124a~k, 126a~e, 130a~e, 132a~e, and 136a~e ports, the reference numerals 138 and 140 cylinder bores, the reference numerals 202, 203, 204, 206, 210, 212, 214, 215, 216, 220, 221, 222, 224, 226, 228, 230, 232, 234, and 236 spools, the reference numerals 202a~d, 203a~b, 204a~b, 206a~c, 208a, 210a~c, 212a~b, 214a~c, 215a~b, 216a~c, 220a~c, 221a~d, 222a~e, 224a~d, 226a~c, 228a~c, 230a~c, 232a~c, 234a~b, and 236a~b lands, the reference numeral 207 plunger, the reference numeral 208 sleeve, the reference numeral 209 plug, the reference numerals 223 and 225 plugs, the reference numeral 238 and 240 pistons, the reference numeral 252 sleeve, the reference numeral

3

EP 0 306 558 B1

252a~c ports, the reference numeral 254 spring seat, the reference numerals 302, 306, 307, 308, 310, 312, 316, 320, 322, 324, 328, 330, 332, 334, 336, 338, and 340 springs, the reference numerals 402, 404, 406, 408, 409, 410, 411, 412, 414, 416, 418, 420, 422, 424, 426, 428, 430, 432, 434, 436, 438, 440, 442, 444, 446, 448 and 450 oil conduits, the reference numerals 502, 504, 506 and 508 shuttle valves, the reference numerals 602, 604, 606, 608, 610, 612, 614, 616, 618, 620, 622, 624, 626, 628, 630, 650, 652, 654, 656 and 658 orificies, and the reference numerals 750, 752, 754, 756 and 758 check valves.

Referring to Fig. 3, the centrifugal force offset valve 44 embodying the present invention comprises a valve bore 902 having five ports 902a to 902g, a valve member in the form of a spool 904 having four lands 904a to 904d (the lands 904b and 904c are of the same diameter and the lands 904a and 904d are of smaller diameter than the former two), and a spring 906 biasing the spool 904 to the left as viewed in Fig. 3. The ports 902a and 902d communicate with each other by a fluid conduit 462, and the port 902d communicates with the clutch C3 via a fluid conduit 464. The port 902b communicates with a fluid conduit 430 which defines a part of a governor pressure circuit. The port 902c and port 902f communicate with a fluid conduit 442. This fluid conduit 442 communicates with the 3-4 shift valve 24 and is always supplied with fluid pressure to establish first, second and third speed ratios. The ports 902e and 902g are drain ports, respectively.

The operation is described hereinafter.

As apparent from the preceding Table, the clutch C2 and brake B2 are actuated in the fourth speed ratio. Under this condition, the clutch drum of the clutch C3 rotates at high speeds and is subject to a centrifugal force which is proportional to the square of the rotational speed of the clutch drum. When, under this condition, the 3-4 shift valve 24 (see Fig. 2(b)) shifts from an upshift position thereof, as illustrated by the left half thereof in·Fig. 2(b), to a downshift position thereof, as illustrated by the right half thereof in Fig. 2(b), the fluid pressure (line pressure) is supplied to the fluid conduit 442. When the fluid pressure is supplied to the fluid conduit 442, the spool 904 of the centrifugal force offset valve 44 assumes a state indicated by the bottom half thereof in Fig. 3 wherein pressure regulation is effected by using the line pressure in the port 902c as a source of fluid pressure and the port 902e as a drain port. When the spool 904 assumes this state, the fluid pressure Pr in the ports 902a and 902d is regulated to such a value that the sum of a rightwardly directed force, viewing in Fig. 3, due to the fluid pressure (Pr) in the port 902a and a rightwardly directed force, as viewed in Fig. 3, due to the fluid pressure (governor pressure PG) in the port 902a balances with the sum of a leftwardly directed force, as viewed in Fig. 3, due to the fluid pressure (line pressure PL) in the port 902f and a leftwardly directed force, as viewed in Fig. 3, due to the spring 906. The above mentioned fluid pressure Pr is determined by the following equation.

Assuming that the area of the land 904a is S1, a differential area between the lands 904a and 904b is S2, a differential area between the lands 904c and 904d is S3 (S3 = S1), and a force of the spring 906 is f, then

$$Pr \cdot S1 + PG \cdot S2 = PL \cdot S3 + f$$
$$Pr = (S3/S1) \cdot PL - (S2/S1) \cdot PG + f/S1.$$

Since S3 = S1,

$$Pr = PL - (S2/S1) \cdot PG + f/S1.$$

Since the force f of the spring 906 is set very small, then

$$Pr = PL - (S2/S1) \cdot PG.$$

As will be apparent from the above equation, the fluid pressure Pr decreases as the governor pressure PG increases. The governor pressure is proportional to the square of the rotational speed of the output shaft O and the rotational speed of the output shaft O is proportional to the rotational speed of the clutch drum of the clutch C3. Thus, the fluid pressure Pr decreases as a function of the square of the rotational speed of the clutch drum. Since the fluid pressure created within the clutch drum by the centrifugal force is proportional to the square of the rotational speed of the clutch drum, the above mentioned fluid pressure Pr decreases as the centrifugal force increases. By setting the areas S1 and S2 to appropriate values, it is possible to let a decrease in the fluid pressure Pr due to the rotation of the clutch drum equal to an increase in fluid pressure within the clutch drum due to the centrifugal force. This means that the fluid pressure for actuating the clutch C3 can be kept substantially unaffected by the centrifugal force irrespective of the variation in rotational speed of the clutch drum. Therefore, even at high vehicle speeds,

4

substantial shocks in effecting 4-3 downshifting are avoided. Similarly, substantial shocks in effecting 4-2 downshifting and 4-1 downshifting are avoided.

Since substantially no governor pressure is available when the vehicle moves off from the standstill, line pressure which is not reduced acts on the clutch C3, thus securing sufficiently large capacity of the clutch.

Although in the above described embodiment, the present invention has been applied to the four speed automatic transmission, the present invention may be applied to any automatic transmission as long as it has a clutch which is engageable when its clutch drum is rotating.

From the preceding description, it will be appreciated that substantial shocks in effecting downshifting from the four speed ratio to any one of the third, second and first speed ratios are avoided.

## Claims

1.  In an automatic transmission:

    fluid operated friction units, including a first clutch (C2), a second clutch (C3) and a brake (B2), which are selectively made operative and inoperative to produce first, second, third and fourth speed ratios, the first clutch having a first chamber and being engaged when the first chamber is pressurized, the second clutch having a second chamber and being engaged when the second chamber is pressurized, the brake having a servo apply chamber (S/A) and a servo release chamber (S/R), said brake being released when said servo release chamber (S/R) is pressurized and being applied when said servo release chamber (S/R) is depressurized with said servo apply chamber (S/A) being pressurized;

    means (2) for generating an actuating fluid pressure;

    a 2-3 shift valve (22) communicating with said actuating fluid pressure generating means (2) and the first chamber (C2), said 2-3 shift valve having an upshift position where it supplies the actuating fluid pressure to the first chamber (C2);

    a 3-4 shift valve communicating with said actuating fluid pressure generating means (2) and the first, second and servo release chambers (C2, C3, S/R), said 3-4 shift valve having a downshift position where it supplies the actuating fluid pressure to the second chamber (C3) and provides communication between the first and servo release chambers (C2, S/R);

    said 3-4 shift valve (24) having an upshift position wherein it discharges hydraulic fluid from the second and servo release chambers (C3, S/R); and

    means for defining a drain passage (444, 124d, 124c, 124g, 446) which allows the fluid discharged from said servo release chamber (S/R) to pass therethrough when said 3-4 shift valve (24) is moved to the upshift position thereof;

    ### BEING CHARACTERIZED IN THAT

    said drain passage defining means includes a first orifice (652) and a 3-4 timing valve means (30) for providing a passage bypassing said orifice (652) if the governor pressure or the speed is lower than a predetermined value dependent of the throttle pressure or throttle position; and

    that said drain passage defining means includes a second orifice (602) arranged in series with said first orifice (652), and a 2-4 timing valve means (26) responsive to the fluid pressure in said first chamber (C2) for providing a passage portion bypassing said second orifice (602) if the fluid pressure in the first chamber (C2) is higher than a predetermined value.

## Revendications

1.  Transmission automatique dans laquelle :

    des unités à friction entraînées par fluide, comprenant un premier embrayage (C2), un second

5

embrayage (C3) et un frein (B2), qui sont sélectivement rendus opérationnels ou désactivés afin de produire des premier, second, troisième et quatrième rapports de vitesse, le premier embrayage ayant une première chambre et étant en prise lorsque la première chambre est pressurisée, le second embrayage ayant une seconde chambre et étant en prise lorsque la seconde chambre est pressurisée, le frein ayant une servo chambre d'application (S/A) et une servo chambre de relâchement (S/R), ledit frein étant relâché lorsque ladite servo chambre de relâchement (S/R) est pressurisée et étant appliqué lorsque ladite servo chambre de relâchement (S/R) est dépressurisée avec ladite servo chambre d'application (S/A) étant pressurisée;

des moyens (2) pour générer une pression de fluide de déclenchement;

une soupape de changement 2-3 (22) qui communique avec ledit moyen de génération d'une pression de fluide de déclenchement (2) et le premier embrayage (C2), ladite soupape de changement 2-3 ayant une position de changement à la volée où elle fournit la pression de fluide de déclenchement à la première chambre (C2);

une soupape de changement 3-4 communiquant avec ledit moyen de génération de pression de fluide de déclenchement (2) et les première, seconde chambres et la servo chambre de relâchement (C2, C3, S/R), ladite soupape de changement 3-4 ayant une position de rétrogradage où elle applique la pression de fluide de déclenchement à la seconde chambre (C3) et permet la communication entre la première chambre (C2) et la servo chambre de relâchement (C2, S/R);

ladite soupape de changement 3-4 (24) ayant une position de changement à la volée, dans laquelle elle décharge un fluide hydraulique depuis la seconde chambre et la servo chambre de relâchement (C3, S/R); et

des moyens pour définir un passage de régulation (444, 124d, 124c, 124g, 446) qui permettent au fluide déchargé depuis la chambre de relâchement (S/R) afin de passer au travers de ceux-ci lorsque ladite soupape de changement 3-4 (24) est déplacée en position de changement à la volée de celle-ci;

**CARACTERISEE** EN CE QUE

ledit moyen définissant un passage de régulation comprend un premier orifice (652) et un moyen formant soupape de temporisation 3-4 (30) pour offrir un passage de contournement dudit orifice (652) si la pression de contrôle ou la vitesse est inférieure à une valeur prédéterminée qui dépend de la pression au papillon d'accélérateur ou de la position du papillon d'accélérateur; et

ledit moyen définissant un passage de régulation comprenant un second orifice (602) disposé en série avec ledit premier orifice (652), et un moyen formant soupape de temporisation 2-4 (26) qui répond à la pression de fluide dans ladite première chambre (C2) afin d'offrir une partie de passage contournant ledit second orifice (602) si la pression de fluide dans la première chambre (C2) est supérieure à une valeur prédéterminée.

## Ansprüche

1. Automatisches Getriebe mit:

fluidbetätigten Reibungseinheiten, enthaltend eine erste Kupplung (C2), eine zweite Kupplung (C3) und eine Bremse (B2), die wahlweise in Betrieb gesetzt und außer Betrieb gesetzt werden, um ein erstes, zweites, drittes und viertes Übersetzungsverhältnis zu erzeugen, wobei die erste Kupplung eine erste Kammer aufweist und in Eingriff ist, wenn die erste Kammer unter Druck gesetzt wird, die zweite Kupplung eine zweite Kammer aufweist und in Eingriff ist, wenn die zweite Kammer unter Druck gesetzt ist, die Bremse eine Servo-Anlegekammer (S/A) sowie eine Servo-Entlastungskammer (S/A) aufweist, die Bremse gelöst ist, wenn die Servo-Entlastungskammer (S/A) unter Druck gesetzt ist und wirksam ist, wenn die Servo-Entlastungskammer (S/R) druckentlastet ist, während die Servo-Anlegekammer (S/A) unter Druck gesetzt ist;

einer Einrichtung (2) zum Erzeugen eines Betätigungsfluiddruckes;

einem 2-3 Schaltventil (22), das mit der Erzeugungseinrichtung (2) für den Betätigungsfluiddruck und der ersten Kammer (C2) kommunizierend verbunden ist, wobei das 2-3 Schaltventil eine Heraufschaltstellung aufweist, in der es den Betätigungsfluiddruck der ersten Kammer (C2) zuführt;

einem 3-4 Schaltventil, das mit der Erzeugungseinrichtung (2) für den Betätigungsfluiddruck und der ersten, zweiten sowie der Servo-Entlastungskammer (C2, C3, S/R) verbunden ist, wobei das 3-4 Schaltventil eine Herunterschaltstellung aufweist, in der es den Betätigungsfluiddruck der zweiten Kammer (C3) zuführt und eine Verbindung zwischen der ersten und der Servo-Entlastungskammer (C2, S/R) herstellt;

wobei das 3-4 Schaltventil (24) eine Heraufschaltstellung aufweist, in der es Hydraulikfluid von der zweiten und der Servo-Entlastungskammer (C3, S/R) abgibt; und

einer Einrichtung, um einen Entlastungskanal (444, 124d, 124c, 124g, 446) zu bilden, der es gestattet, daß das Fluid, welches aus der Servo-Entlastungskammer (S/R) abgeführt wird, durch ihn hindurchgeht, wenn das 3-4 Schaltventil (24) in seine Heraufschaltstellung bewegt wird;

**dadurch gekennzeichnet,**

daß die den Entlastungskanal bildende Einrichtung eine erste Drosselstelle (652) und eine 3-4 Zeitgeberventileinrichtung (30) enthält, um einen Kanal zu bilden, der die Drosselstelle (652) in einem Bypaß überbrückt wenn der Reglerdruck oder die Drehzahl niedriger ist als ein vorgegebener Wert, der vom Drosseldruck oder der Drosselstellung abhängt; und daß die den Entlastungskanal bildende Einrichtung eine zweite Drosselstelle (602) enthält, die in Reihe mit der ersten Drosselstelle (652) liegt, und eine 2-4 Zeitgeberventileinrichtung (26) in Abhängigkeit von dem Fluiddruck in der ersten Kammer (C2) arbeitet, um einen Kanalabschnitt einzurichten, der die zweite Drosselstelle (602) in einem Bypaß überbrückt, wenn der Fluiddruck in der ersten Kammer (C2) höher ist als ein vorgegebener Wert.

7

# FIG.1

EP 0 306 558 B1

FIG.2(a)

EP 0 306 558 B1

FIG.2(b)

FIG.2(c)

# FIG.3